# EUROPEAN PATENT APPLICATION

(11) **EP 0 967 666 A1**
(43) Date of publication of application: **29.12.1999**
(21) Application number: 99304494.0
(22) Date of filing: 09.06.1999
(51) Int. Cl.: H01L 41/09

(54) **Motor**

(30) Priority: 13.06.1998 GB 9812693
(71) Applicant: Renishaw plc, Wotton-Under-Edge Gloucestershire GL12 8JR (GB)
(72) Inventor: Powley, David Graham, Alveston, Bristol BS35 3HZ (GB)
(74) Representative: Jackson, John Timothy

(57) **Abstract**

A motor has a rotor 12 which is consrained relative to a stator 10 in all directions other than the sense of relative motion of the rotor and the stator by means of two sets of six impulsion elements 16A, 16B. Each impulsion element comprises a support element 20 which is mounted to the stator via an actuator made up of two piezoelectic elements 22. The actuator is operable to cause the support element to execute a circular motion to urge the rotor to rotate relative to the stator. The sets of impulsion elements are driven in antiphase with each other so that while one set of impulsion elements urges the rotor in a circular path relative to the stator, the other set of impulsion elements is in a recovery part of its oscillation cycle. The motor has the advantages of providing substantially friction-free operation, and good positional control.

## Description

The present invention relates to a motor. It is known to construct a linear motor in which the impulse for movement of the movable element (hereinafter "rotor") of the motor is provided by an elongate array of oscillating impulsion elements, which are typically provided by piezo electric elements. The elements are oscillated sequentially to urge the rotor along its path, and motion of the rotor is guided by means of a bearing, which also provides a reaction force against at least part of the impulse motion provided by the piezoelectric elements.

The present invention provides an alternative motor in which the rotor is entirely located relative to the stator by means of a plurality of elements which provide both constraint of the rotor relative to the stator in directions other than the sense of relative motion of the rotor and the stator (whether that be linear or rotary), and which also act as impulsion elements to generate relative motion of the rotor and the stator in the sense of relative motion.

In one embodiment the elements are provided in two or more sets, each of which is capable on its own of providing constraint of the rotor, and the sets of elements are oscillated in a plurality of phases, so that while one of the set of elements is providing impulsion to the rotor, the remaining sets of elements are in a recovery phase; in this way continuous, or quasi-continuous impulsion can be provided. An additional benefit of such an embodiment is that the motor is substantially friction free, since only those support elements which are providing impulsion to the rotor are in contact with the rotor. In a preferred embodiment, two sets of elements are provided and are oscillated in antiphase.

In a preferred embodiment, the impulsion elements comprise a support element which bears against the rotor, and one or more actuators by means of which the support elements are mounted on the stator, and which are operable to oscillate the support elements. In one embodiment, each support element is mounted to the stator by a pair of piezoelectric actuators.

In a further preferred embodiment, the acuators are provided by, electrostrictive elements, or magnetostrictive elements. Alternatively, appropriately configured mechanical actuators may be employed, which provide the requisite motion of the support elements, and which may then be actuated separately.

One advantage of the present invention is the absence of the need for any bearings guiding the movement of the armature relative to the stator, since one or more sets of support elements locate the rotor throughout operation of the. Another advantage is a greater degree of static stability and static positioning accuracy provided by a motor of the present invention. Acquisition of either of these advantages is not a requisite of practising the present invention.

According to a further and independent aspect of the invention there is provided a method of locating and impelling a rotor of a motor relative to a stator, the method comprising the steps of: oscillating a first set of support elements with a first phase, and a second set of support elements with a second phase which is different to the first phase; bringing the first set of support elements into frictional engagement with the rotor during an impulsion part of the oscillating cycle of the first set of support elements, thereby to provide impulsion of the rotor relative to the stator in the sense of relative motion, the impulsion part of the oscillating cycle being less than or equal to half of a cycle, wherein the first set of support elements additionally constrain motion of the rotor relative to the stator in directions other than the sense of relative motion during the impulsion part of the cycle; wherein the relative phase of the oscillating cycles of the first and second sets of support elements is such that, at or toward the end of the impulsion cycle of the first set of support elements, the second set of support elements enter the impulsion part of their oscillating cycle, thereby to constrain the rotor relative to the stator in directions other than the sense of relative motion, and to impel the rotor in the sense of relative motion.

An embodiment of the invention will now be described, by way of example and with reference to the accompanying drawings in which:
Fig 1 is a plan view of an embodiment of rotary motor according to the present invention;
Fig 2 is a section through II-II in Fig 1; and
Fig 3 is a detail of Figs 1 and 2.

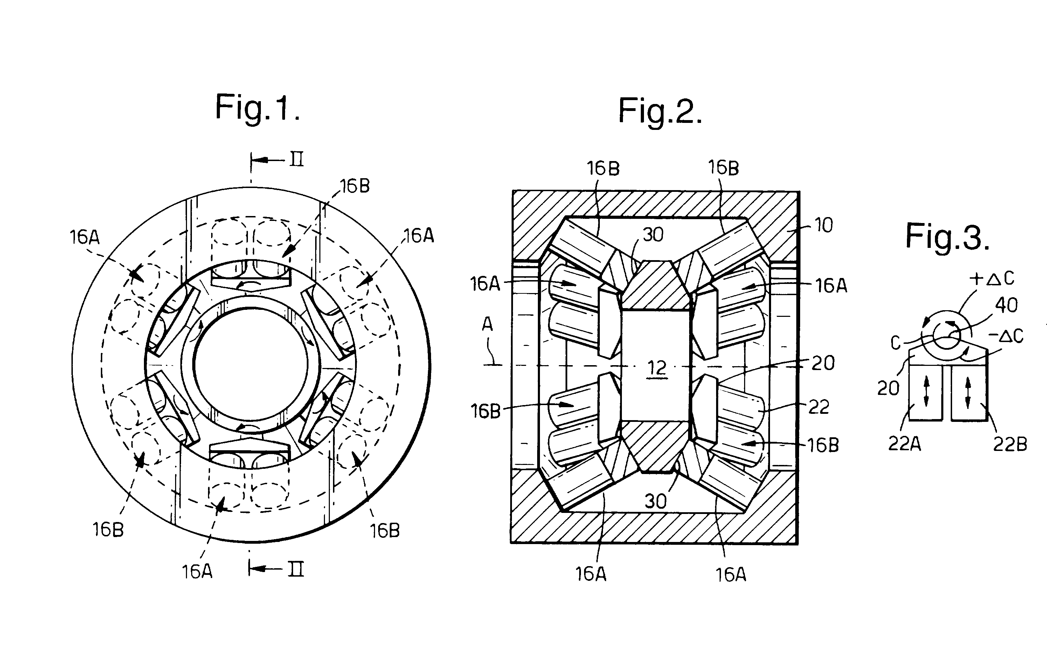

Referring now to Figs 1 and 2, a motor includes a stator, here having the form of a cylindrical housing 10, relative to which a disc-like rotor 12 is rotatable about an axis A of relative rotation. In the present illustrated example the sense of relative motion of the rotor and the stator is rotary, but the invention applies equally to motors in which the sense of relative motion is linear. The rotor 12 is located relative to the stator 10 by means of twelve impulsion elements 16, divided into two sets of six elements 16A, 16B. Each impulsion element has a support element 20, here having the form of a ceramic rocker beam, mounted to the stator 10 via an actuator, which in the present example has the form of a pair of stacks 22 of piezoelectric elements. The rotor 12 has a pair of frusto-conical bearing surfaces 30, at its outer perimeter, and the support elements 20 are arranged on the stator so that two sets of six support elements 20 contact against each of the bearing surfaces 30. Each support element 20 comprises a small flat 40, which contacts the bearing surface 30 of the rotor 12. Each of the sets of six impulsion elements 16A, 16B constrains motion of the rotor 12 relative to the stator in directions other than the sense of relative motion, which in this example is rotary motion. Generally the number of impulsion elements 20 in a set is determined by the number of supports elements 20 required, taking account of the effects of friction and gravity and/or any other biasing force applied to the rotor), to maintain the rotor in a relatively stable position relative to the stator. (N.B. The level of stability required is in each case determined by the accuracy demands of the purpose the motor is required to serve.)

Rotation of the rotor 12 relative to the stator 10 occurs as a result of impulses applied to the rotor 12, at the bearing surface 30, by the support elements 20. These impulses are generated from compression and expansion of the actuators in the form of the piezoelectric stacks 22, which result in a circular oscillating motion of the support elements 20. In order to provide an impulse which will, when the combined effect of all of the support elements is taken into account, rotate the rotor 12 relative ta the stator 10, the bearing surfaces 40 of the support elements 20 describe a circular path C. This circular path is achieved by the following sequence of contractions and expansions in the piezoelectric stacks 22A,B: contraction of stack 22A; subsequently contraction of stack 22B; expansion of stack 22B; and expansion of stack 22A. This sequence can be achieved by applying sinusoidally varying voltages to each of the piezoelectric elements 22A, 22B, which are phased at 90 degrees relative to each other.

In the present example, where there are two sets of six impulsion elements 16, which will be driven such that their support elements 20 oscillate in a circular path with relative phases of 0 and 180°, although all the support elements 20 will be driven in the same direction i.e. a clockwise or anticlockwise orbit when viewed from the vantage point of Fig 1. This means that while the support elements of eg. the set of impulsion elements 16A are moving though the part of the circular path +ΔC, thereby causing the rotor 12 to rotate relative to the stator 10, the support elements of the set of impulsion elements 16B will be describing the path -ΔC, or undergoing what may be termed the "recovery" part of the oscillaion cycle. Thus, support elements 20 of one of the sets of impulsion elements 16 is continuously urging the rotor 12 to rotate relative to the stator 10, while the other set or sets is repositioning in preparation for repeating the process. Where only a single set of six impulsion elements is provided, there will be instances when the rotor 12 is unlocated relative to the stator 10, as the support elements 20 recover in preparation to provide the next impulse.

While the present invention has been described using a rotary motor as an example, it applies equally to a linear motor. In the case of such a linear motor, the "rotor" would have four bearing surfaces, arranged as two V's, or, put another way, the four surfaces would correspond to the four sides of a parallelogram. In each example, of the present invention a set of supports is defined as the minimum number of supports, once friction and gravity are taken into consideration, which are required to locate the armature relative to the stator to within the accuracy limits of the task for which the motor is required. Thus, in the case of a linear motor, ideally four impulsion elements would make up a set.

## Claims

1. A motor having a stator and a rotor which is moveable relative to the stator in a sense of relative motion, the rotor being constrained in all directions transverse to the sense of relative motion by a plurality of support elements on the stator, wherein each support element is connected to the stator via at least one actuator which is actuable to cause an oscillatory motion of the support element thereby to cause motion of the rotor relative to the stator in the sense of relative motion.

2. A motor according to claim 1 wherein the motor is a linear motor, and the sense of relative motion is linear.

3. A motor according to claim 1 wherein the motor is a rotary motor and the sense of relative motion is rotational.

4. A motor according to claim 1 wherein the oscillatory motion of the support is circular, and takes place in a plane parallel to the sense of relative motion.

5. A motor according to claim 1 having at least two sets of support elements, each set of support elements constraining the rotor relative to the stator in a direction transverse to the sense of relative motion, and wherein the actuators of the two sets of support elements are actuable to oscillate in antiphase.

6. A motor according to claim 5 wherein each set of support elements has six support elements.

7. A motor according to any one of the preceding claims wherein the rotor has at least two bearing surfaces against which the support elements bear, the at least two bearing surfaces extending at an angle to each other in a plane transverse to the sense of relative motion.

8. A motor according to claim 7 wherein the motor is a rotary motor and the rotor has two bearing surfaces extending around the periphery of a circle.

9. A motor according to claim 7 wherein the motor is a linear motor and the rotor has four bearing surfaces, arranged in two pairs, and correspondin, in a plane transverse to the sense of relative motion, to four sides of a parallelogram.

10. A motor according to any one of the preceding claims, wherein two actuators are provided to connect each support element to the stator.

11. A motor according to claim 10 wherein each actuator is provided by one or more piezoelectric element.
